# EUROPEAN PATENT APPLICATION

(11) **EP 4 242 252 A1**
(43) Date of publication of application: **13.09.2023**
(21) Application number: 22160492.9
(22) Date of filing: 07.03.2022
(51) Int. Cl.: C08H 7/00, C08L 97/00, C08G 8/38

(54) **METHOD FOR PREPARING A STABLE LIGNIN-PHENOL BLEND AND A STABLE LIGNIN-PHENOL BLEND OBTAINED BY SAID METHOD**

(71) Applicant: Borealis AG, 1020 Vienna (AT)
(72) Inventor: DUNLOP-BRIERE, Alexandre, 4021 Linz (AT); DICKE, René, 4021 Linz (DE); REGUILLO CARMONA, Rebeca, 4021 Linz (DE); NERGER, Ingo Christian, 4021 Linz (AT); KRABÁC, Lubomír, 4021 Linz (AT); KAMM, Birgit, 4040 Linz (AT); ZEPPETZAUER, Franz, 4040 Linz (AT); van HERWIJNEN, Hendrikus, 4040 Linz (AT); SOLT-RINDLER, Pia, 4040 Linz (AT); BLIEM, Peter, 4040 Linz (AT)
(74) Representative: Maikowski & Ninnemann Patentanwälte Partnerschaft mbB

(57) **Abstract**

The present invention relates to a method for preparing a stable lignin-phenol blend and a stable lignin-phenol blend obtained by said method

## Description

The present invention relates to a method for preparing a stable lignin-phenol blend and a stable lignin-phenol blend obtained by said method.

### Description

Lignin is an aromatic polymer and a major constituent of wood and other plants. In recent years, it has attracted significant attention as a possible renewable substitute to primarily aromatic chemical precursors currently sourced from the petrochemical industry.

Lignin, being a polyaromatic network, has been extensively investigated as a suitable substitute for phenol during production of phenol-formaldehyde adhesives that are used during manufacturing of structural wood products such as plywood, oriented strandboard and fiberboard. During synthesis of such adhesives, phenol, partially replaced by lignin, is reacted with formaldehyde in the presence of either basic or acidic catalyst to form a highly crosslinked aromatic resins.

Currently, only limited amounts of the phenol can be replaced by lignin due to the lower reactivity of lignin. WO 2016/157141 A1 describes a method to obtain an activated lignin composition that can be used for synthesizing wood adhesives such as lignin-phenol-formaldehyde resins used in plywood, particle board or wafer board. The lignin composition described comprises aqueous dispersants, aqueous catalysts and lignin.

Another problem of using lignin modified phenol resins on an industrial scale is the low reactivity of the lignin precursors. Thus, the incorporation of lignin into the long-established phenolic resins recipes in an industrial scale has proven to have several disadvantages for the resin producers, which have been a major drawbacks for the implementation of these adhesives in end consumer products.

The incorporation of lignin into the traditional phenol-formaldehyde resins production brings additional technical challenges at various steps of the production chain: raw material transport (transport conditions, unloading procedure, bulk solids handling), raw material storage (storage design, solids handling, flowability properties, compaction, caking, storage conditions: time, temperature); resin production (processability issues: hydrophobicity, agglomeration, precipitation, homogeneous resins); resin storage (storage design, pumping equipment, storage conditions: time, temperature, long term stability, viscosity increase, sedimentation); plywood manufacturing (processability issues: viscosity, increased curing time, adhesive performance, constant quality profile).

Another issue is the dissolving step of lignin during the phenol-resin manufacturing which requires intensive mixing and time. Often the resulting mixture lacks homogeneity and results in high viscosity depending on lignin quality and may end up in issues for defining the cut-off criteria for resin production.

These disadvantages are closely related to the intrinsic nature of lignin, which is neither chemically nor physically homogeneous. Lignin quality depends on geographical and seasonal conditions. Parameters such as particle size distribution, chemical composition and molecular weight distribution vary significantly between production batches or even between samples within the same batch.

Lignin-phenolic resins are typically prepared by mixing the different raw materials lignin, phenol, formaldehyde (or other binder), additives and the required catalysts (acid or basic) under specific conditions, highly dependent on the final use of the resin and the resin manufacturer (see WO 2016/157141 A1).

In another approach a lignin-phenolic-resin is prepared by using fractionated lignin (EP 3 495 375 A1). Here lignin is dissolved in a water / organic solvent mixture, which is subsequently subjected to ultrafiltration through one or more filtration membranes for producing a predetermined number of lignin fractions with lignin of a predetermined range of molecular weight. However, this is a very cost intensive method and not applicable for large-scale resin synthesis.

WO 2015/079106 A1 describes a method for treating lignin and for producing a binder composition. The method comprises the steps of a) dissolving lignin into an aqueous composition, which contains a compound selected from the class of phenols while keeping the temperature of the composition at 0-60°C; and b) allowing the composition to react at 60-100°C and a pH of 6-14. In a subsequent step c) the composition formed in step b) is mixed with a crosslinking agent such as formaldehyde. The lignin is selected from Kraft lignin, steam explosion lignin, lignin from soda process etc. The lignin is not further fractionated and thus rather inhomogeneous. Furthermore, the compositions described have a total content of 35% water and NaOH.

CN 107699173 B discloses a preparation method of a phenolic resin using a graded lignin. The object of this document is to provide a lignin-based phenolic resin with a longer storage time. This is achieved by using a lignin having a uniform molecular weight by fractional purification of lignin. The lignin fractionation is preferably done by ultrafiltration and different lignin fractions are obtained. Each of the lignin fractions are mixed with molten phenol and NaOH solution to obtain a phenolated lignin reaction. The compositions as described in the examples comprise an amount of aqueous alkaline solution of at least 33%.

WO 2014/080033 A2 discloses a method for producing phenol formaldehyde resin-based polymers, wherein a phenolic component reacts with formaldehyde, and wherein 60-100% of the phenolic compound of the resin is replaced by a lignin.

WO 2020/109983 A1 describes a method for dissolving lignin in an aqueous medium, wherein lignin is partially methylolated. The method comprises the steps of a) mixing lignin, alkali, phenol and formaldehyde in an aqueous medium, b) mixing until a solution of lignin in the aqueous medium has been obtained, wherein the molar ratio between the formaldehyde and total amount of phenol and lignin monomer is 0.4 or less. It is stated that the chemical modification using formalin to partially methylolate lignin improves the solubility of lignin in their alkaline phenol-lignin aqueous blends. This approach seems to have its limitations however. It requires a lot of water to be present in the blend, with an example given there where the blend contains 24% water, 53% of phenol and only 18% of lignin.

Thus, the prior art focuses on the final provision of a lignin-based-phenolic resin. It would be however of an advantage to provide a stable phenol-lignin blend as a precursor blend or intermediate blend for resin production. Such a stable precursor blend would provide a number of advantages, since it is still extremely challenging to obtain lignin-phenolic resins of constant quality and acceptable performance that can be commercialized, especially when increasing the lignin content in the phenolic resin recipe. Furthermore, such a blend could be applicable in existing PF-resin plants without the requirement of costly investments for upgrades, since the resin manufacturers can easily adapt the existing phenol dosing equipment to handle such a phenol-lignin blend.

Thus, it is an object of the present invention to overcome those drawbacks.

This object is solved by a method for preparing a stable lignin-phenol blend according to the features of claim 1.

### Method for preparing a lignin-phenol blend

Accordingly, a method for preparing a stable lignin-phenol blend is provided, wherein a suitable lignin source is mixed with phenol, in particular liquefied phenol, to obtain a stable lignin-phenol blend.

According to the invention the present method comprises the following steps:
a) mixing a lignin source with a dispersion system comprising a solvent, preferably organic solvent, more preferably comprising water and an organic solvent, to at least partially disperse the lignin and to obtain a first mixture comprising a dispersed lignin fraction and a precipitated lignin fraction,
b) separating the precipitated lignin fraction from the dispersed lignin fraction to provide a second mixture comprising dispersed lignin and the dispersion system (as aqueous lignin source),
c) mixing phenol, in particular solid or liquefied phenol, with the second mixture comprising dispersed lignin and dispersion system to provide a third mixture comprising dispersed lignin, phenol and the dispersion system;
d) optionally removing at least part of the dispersion system from said third mixture comprising dispersed lignin, phenol and dispersion system,
e) obtaining a stable lignin-phenol blend with a residual content of solvent, preferably water, more preferably water and organic solvent, of lower than 20 wt%, preferably lower than 12 wt%, more preferably lower than 8 wt%, such as lower than 6 wt% to provide the stable lignin-phenol blend.

In one embodiment of the present method it is also possible to apply steps b) and c) in reverse order.

According to the present invention, a method is provided, wherein the (raw) lignin source is dispersed in a dispersion system and the precipitated lignin fraction is separated from the dispersed lignin fraction. The dispersed lignin fraction is subsequently used as lignin source. Thus, the lignin source used according to the invention underwent only one fractionation step. A further treatment of the dispersed lignin fraction such as drying is not required. Thus, this approach can also be described as a wet blending of the lignin source with phenol.

In yet another embodiment of the present method it is envisaged to remove at least part of the solvent in a step a1) following the mixing of the lignin source with a dispersion system comprising a solvent in step a). Step a1) is subsequently followed by separating the insoluble lignin sediment (precipitated) fraction from the dispersed lignin fraction in step b) and adding phenol to the mixture comprising dispersed lignin and solvent in step c). The remaining solvent containing at least partially water is finally removed from the mixture comprising soluble lignin, phenol and dispersion system in step d).

The method of the invention overcomes most of the above-mentioned problems by providing a stable lignin-containing raw material for the wood resin industry: stable lignin-phenol blends in form of dispersions comprising dissolved (soluble) and colloidal lignin. The lignin-phenol blends comprise phenol that incorporate lignin at specific concentrations, and that can be used as a single raw material (stable intermediate) for the production of lignin-phenolic-formaldehyde resins and has a performance that is comparable to the standard lignin-phenolic -formaldehyde resin. The lignin-phenol blend obtained by this method is not only stable over at least three weeks at standard storage temperature conditions, but also does not contain any additional compound, such as formaldehyde; thus, the lignin-phenol blend provided by this method is free of formaldehyde and formaldehyde is only added at the time of preparing a resin.

According to the present method a suitable lignin source is mixed with a suitable dispersion system, such as only water, mixtures of water and organic solvent or only an organic solvent.

The lignin source, in particular raw lignin source may be of different origin and suppliers, in particular from sources such as Kraft lignin, lignosulphonate, soda lignin or organosolv lignin. It is to be understood that the lignin source used may contain a certain amount of water. The dry matter content of the starting lignin may between 60 and 99 wt%, preferably between 65 and 98 wt%, more preferably between 70 and 95 wt%; i.e. the water content of the starting lignin material may be up to 40 wt%, preferably up to 35 wt%. It is also possible that the lignin material undergoes a drying step before use. In this case, the water content of the starting lignin material may be less than 5 wt%, preferably less than 1 wt%.

In an embodiment the dispersion system comprises as organic solvents low molecular alcohols, in particular, ethanol, methanol, iso-propanol, low molecular ketones, in particular acetone, glycols, phenol or mixtures thereof with water.

In a more preferred embodiment, the dispersion system comprises water, acetone, ethanol, methanol, iso-propanol, phenol, an acetone/ water, ethanol /water, phenol/ water, phenol/ acetone/ water or phenol/ acetone mixture, preferably acetone, ethanol, acetone/ water, phenol/ water or ethanol /water, more preferably acetone or acetone /water.

The mixing of the lignin source with the dispersion system can be done in various manners.

In one embodiment mixing the lignin source with the liquid dispersant system is done in a continuously operated system for high shearing mixing, dispersing, dissolving and if necessary de-agglomeration of the lignin source with a hydraulic residence time preferably below 45 minutes and Bo>5, more preferably below 25 minutes and Bo>10 and most preferably below 15 minutes and Bo>20.

In fluid dynamics, the Eötvös number (Eo), also called the Bodensteinnumber (Bo), is a dimensionless number measuring the importance of gravitational forces compared to surface tension forces and is used (together with Morton number) to characterize the shape of bubbles or drops. A high value of the Eötvös or Bodensteinnumber indicates that the system is relatively unaffected by surface tension effects; a low value (typically less than one) indicates that surface tension dominates.

In another embodiment mixing the lignin source with the liquid dispersant system is done in a system for mixing, suspending, dissolving and if necessary de-agglomeration of the lignin source which involves at least one compartment that is operated in batch mode to secure a closely defined minimum residence time of each volume element under defined conditions of mechanical agitation.

In yet a further embodiment mixing the lignin source with the liquid dispersant system is done in a system for mixing, suspending, dissolving and if necessary de-agglomeration of the lignin source which involves at least one compartment that is operated in batch mode to secure a closely defined minimum residence time of each volume element under defined conditions of mechanical agitation and elevated temperature levels.

The result of the mixing process of lignin with a suitable dispersion system provides a suspension of insoluble lignin fraction(s) in a dispersion, preferably solution of the soluble lignin fraction. Depending on the desired product quality and also on the raw lignin quality, the process can be targeted to minimize the relative amount of insoluble lignin, providing a dispersion containing only soluble lignin.

"Dispersed lignin" within the meaning of the present invention refers to a fraction of lignin that is dispersed and preferably dissolved in the dispersion system to provide dispersions comprising dissolved (soluble) lignin and colloidal lignin. The resulting dispersed lignin phase consists of a mixture of the soluble lignin fraction and the dispersion medium can contain some finely dispersed particles (as colloidal phase) as long as such dispersion is stable under storage conditions and the conditions of separation step b), and no phase separation or settling occurs.

"Insoluble or precipitated lignin" may thus be described as the fraction of lignin that is not dissolved by the described process and dispersion system. Its characteristic property is, that after mixing it with the solvent, it forms a phase that can be separated from the soluble lignin phase by a process step performing centrifugation or other a physico-chemical separation method. Said insoluble lignin phase is essentially a non-homogenous mixture of the insoluble lignin fraction with the solvent. Depending on the process parameters, the used dispersion system, the raw material and the method of characterization, it might be observed, that the insoluble lignin fraction can also form with the solvent multiple insoluble lignin phases, that can be subjected to further fractionation by a sequence of different physico-chemical separation methods.

Different lignin sources and lignin suppliers may be used providing lignin in micro/nano particles with different densities depending on solvent system composition and ratio to lignin. Thus, the lignin used in the present method may be of different origin. In one embodiment standard lignin may be used as delivered from the supplier without any pretreatment or after pretreatment.

In a further embodiment of the present method between 100-800 g lignin source / L solvent, preferably between 300-600 g lignin source / L solvent, more preferably 400-500 g lignin source / L solvent are mixed in the dispersion system in step a). It is to be understood the amount of lignin added is typically calculated in g/L and refers to the dry lignin content of the lignin source.

As mentioned above, in step b) of the method the dispersed lignin fraction is subsequently separated from the precipitated lignin fraction. This can be done by mechanical separation, such as centrifugation, decantation, siphonication, sedimentation, filtration or ultra-filtration.

After separating the precipitated lignin fraction from the dispersed lignin fraction and providing a mixture of dispersed lignin and dispersion system such as aqueous organic solvent, phenol is added in step c) to said mixture to provide a further mixture comprising dispersed lignin, phenol and the dispersion system.

Thus, no intermediate step of drying and milling the extracted, dispersed lignin fraction is required. Furthermore, addition of such extracted dry purified lignin to phenol is avoided which is difficult and time consuming and does not allow a high lignin loading efficiency (≥50%, as requested by plywood industry customer). This step of directly mixing dispersed lignin with phenol circumvents the problems for re-dispersing the extracted/dissolved lignin in dry form into phenol-water mixtures.

The weight of phenol to be added to the (second) mixture comprising dispersed lignin and the dispersion system in step c) can be between 20 and 80 wt%, preferably between 30% and 75 wt%, more preferably between 45-70 wt% and most preferably between 50% and 67% in respect to the combined sum of the dry-weight of lignin and phenol.

The phenol is added to and dissolved into the soluble, dispersed lignin phase prior to removal of the dispersion system. It is however also possible that phenol is used as a co-dispersant for lignin prior to separation of insoluble lignin in case of applying steps b) and c) in reverse order. Typically, phenol is added to roughly match the expected mass content of lignin in the extraction to get phenol-lignin blends (PLB) that have a ~1:1 mass ratio of phenol and lignin. Phenol dissolves very rapidly under stirring in the lignin-solvent systems.

The phenol to be added in the present method may be provided in a liquefied form. The liquefied state of phenol may be of an advantage for handling and dosage. This can be done for example by providing a phenol solution or molten phenol. It may be important that phenol remains in a liquid phase for increasing solubility of lignin due to higher temperature. Thus, the addition of phenol and the subsequent mixing is preferably done at 42°C or higher, such as 65°C or up to 95°C.

Once the system has been fully dispersed and homogenized, the dispersion system is optionally at least partially removed in step d).

In an embodiment of the method the dispersion system is removed from the (third) mixture comprising dispersed lignin, phenol and dispersion system in step d) until the mixture has a phenol / lignin / solvent system (in particular organic solvent) composition of 50 / 50 / 0 to 40 / 40 / 20, preferably 50 / 50 / 0 to 44 / 44 / 12 or variations thereof (in respect to the lignin/phenol content).

In another embodiment of the method the dispersion system, such as organic solvent and/or water, is removed from said (third) mixture comprising soluble lignin, phenol and the dispersion system in step d) until the mixture has a phenol / lignin / water / organic solvent composition of 50 / 50 / 0 / 0 to 40 / 40 / 10 / 10, preferably 50 / 50 / 0 / 0 to 44 / 44 / 6 / 6 or variations thereof (in respect to the lignin/phenol contents).

The dispersion system may be removed by evaporation, distillation or any other suitable method. For example, the dispersion system may be removed at 60°C under progressively lower pressure (vacuum) and mechanical agitation. The dispersion system can also for example be removed by using heat and mechanical agitation, thereafter the dispersion system can be condensed and recycled. This provides a blend that is finally cooled down from a viscous but gravity-flowing liquid at 60°C to a soft tar-like substance at room temperature that does not flow readily with gravity, depending on residual solvent content.

The viscosity of the lignin-phenol blend obtained according to the present method may be adjusted according to demand and requirement for further use of the blend, as described in further detail below. For the purpose of viscosity adjustment a suitable solvent, in particular an organic solvent such as acetone, and/or water may be added.

It is to be noted that viscosity of the lignin-phenol blend depends on the temperature and/or duration of solvent system removal.

In a further preferred embodiment of the present method, at least one stabilizer may be added to the obtained lignin-phenol blend. In the method in a further step e) at least one stabilizer is added to the lignin-phenol blend obtained in step d).

The stabilizer may be an aqueous alkaline solution or an alkaline compound.

The stabilizer may be added in an amount between 0-20 wt%, preferably between 1-15 wt%, more preferably 4-10 wt% (in regard to the total weight of the blend).

In case of an aqueous alkaline solution as stabilizer, a NaOH solution may be used. When using NaOH solution the final amount of water in the lignin-phenol blend may be 1-15 wt%, preferably 3-10 wt%, most preferably 4-8 wt%, and the final amount of NaOH in the lignin-phenol blend may be up to 1-10 wt%, preferably 3-7 wt% NaOH. In case of an alkaline compound as stabilizer, inorganic alkaline compounds such as NaOH, KOH, or organic alkaline compounds, such as triethylamine, dimethylethylamine or triethanolamine, or mixtures thereof, may be used. Thus, it is possible to add an alkaline compound as solid or liquid. In this case the final concentration of e.g. NaOH concentration in the lignin-phenol blend may reach up to 10 wt%, preferably up to 8 wt%. When using an alkaline solution the pH range of the lignin-phenol blend is between 11 and 14, preferably between 12 and 13.

### Lignin-phenol blend

The stable lignin-phenol blend, in particular stable colloidal lignin-phenol blend, for use in lignin modified phenol-formaldehyde resins obtained by the methods as described comprises
- lignin in an amount between 10-90 wt%, preferably between 30-90 wt%, more preferably between 50 - 90 wt%, even more preferably between 60-90 wt%;
- phenol in an amount between 15-90 wt%, preferably between 15-70 wt%, more preferably between 15 and 50 wt%, even more preferably between 15% and 35 wt%;
- solvent, in particular organic solvent, more in particular aqueous organic solvent in an amount lower than 20 wt%, preferably lower than 10 wt%, more preferably lower than 8 wt%, and
- optionally a stabilizer in an amount between 0-20 wt%, preferably between 1-15 wt%, more preferably 4-10 wt%.

When using an aqueous organic solvent system as dispersion system in the method, the lignin-phenol blend is characterized by a residual content of a solvent system of lower than 20 wt%, preferably lower than 10 wt%, more preferably lower than 8 wt%.

It is to be understood that further additives may also be included and the sum of all ingredients add always up to 100% in each of the embodiments described herein.

The present lignin-phenol blend is characterized by a viscosity of at most 25000 mPa*s, preferably at most 15000 mPa*s, more preferably at most 10000 mPa*s, even more preferably at most 5000 mPa*s, still more preferably at most 1500 mPa*s. Thus, the viscosity of the lignin-phenol blend may be in a range between 20 and 25000 mPa*s, preferably between 50 and 15000 mPa*s, more preferably between 80 and 10000 mPa*s, even more preferably between 100 and 3500 mPa*s, or between 500 and 3000 mPa*s or between 1000 and 2000 MPa*s (measured at 25°C according to ASTM D7042-04).

As mentioned previously, the viscosity of the lignin-phenol blend may be adjusted according to demand and requirement for further use of the blend. For the purpose of viscosity adjustments a suitable solvent, in particular an organic solvent such as acetone, and/or water may be added. It may however be of an advantage not to add any solvent for longer storage stability and only add a suitable solvent for adjusting the viscosity immediately before further use of the lignin-phenol blend.

In an embodiment of the present lignin-phenol blend has a residual content of organic solvent lower than 15 wt%, preferably lower than 10 wt%, more preferably lower than 8 wt%.

In another embodiment, the present lignin-phenol blend has a residual content of water lower than 8 wt%, preferably lower than 5 wt%, more preferably lower than 3 wt%, even more preferably water free.

As mentioned above, the stabilizer may an aqueous alkaline solution or an alkaline compound.

In case of an aqueous alkaline solution as stabilizer, a NaOH solution may be used. When using NaOH solution as solvent the final amount of water in the lignin-phenol blend may be 1-15 wt%, preferably 3-10 wt%, most preferably 4-8 wt%, and the final amount of NaOH in the lignin-phenol blend may be up to 1-10 wt%, preferably 3-7 wt% NaOH.

In case of an alkaline compound as stabilizer, inorganic alkaline compounds such as NaOH, KOH, or organic alkaline compounds, such as triethylamine, dimethylethylamine or triethanolamine, or mixtures thereof, may be used. Thus, it is possible to add an alkaline compound as solid or liquid. In this case, the final concentration of e.g. NaOH concentration in the lignin-phenol blend may reach up to 10 wt%, preferably up to 8 wt%.

When using an aqueous alkaline solution or an alkaline compound the pH range of the lignin-phenol blend is between 11 and 14, preferably between 12 and 13.

Typically, the present phenol-lignin blend has a storage stability of more than 3 weeks (more than 21 days), even up to 6 months. In an embodiment the phenol-lignin blend may be stored at about 5°C overnight without any loss of storage stability. Storage stability and/or stable means that no phase separation, no precipitation, and no agglomeration does occur.

### Lignin modified phenol-formaldehyde resin:

The present stable lignin-phenol blend can be used for preparing lignin modified phenol-formaldehyde resins.

The use of a stable lignin-phenol blend also provides several advantages: reduced production times due to usage of premixed lignin-phenol blend, low viscosity profile allows easy control of production process until reaching final resin viscosity level, which is one criterion for cut-off the condensation reaction with formaldehyde.

Such lignin modified phenol-formaldehyde resins are obtainable by reacting the stable lignin-phenol blend with formaldehyde.

Formaldehyde is added to the lignin phenol-blend in an amount such that a formaldehyde / phenol ratio of 1.5 - 2.5 mol/mol, preferably of 2 mol/mol and a formaldehyde / lignin ratio of 0.15 - 0.35 mol/mol, preferably of 0.2 mol/mol is adjusted. For example the total amount of formaldehyde to bed added may add to 2 mol per mol phenol and 0.2 mol per mol Lignin. NaOH is added stepwise till a final ratio of NaOH / Phenol of 0.5 - 1 mol/mol, preferably 0.8 mol/mol is adjusted. The solid content of the modified phenol-formaldehyde resin obtained in the aqueous dispersion is about 40-65 wt%, preferably 45-55 wt%.

Further additives, such as crosslinkers like amines may be added to the reaction system.

As will be described in more detail in the experimental section the use of the stable lignin-phenol blend according to the invention allows a certain condensation time or synthesis time after mixing with formaldehyde. It turned out that after adding formaldehyde to the present lignin-phenol blend the viscosity of the resin reaction mixture is in an optimal range to allow a proper resin synthesis and allow the control of the synthesis. The condensation time until a viscosity of the resin reaction mixture of about 600 mPa*s is obtained is about 50 min. The longer condensation time allows for achieving the required parameters in the final wood composite boards. In contrast, when using comparative lignin sources the viscosity of the resin is too high right from the beginning of the condensation reaction. This causes a reduction of the resin synthesis time and finally the performance of the wood composite boards when such adhesive is used (see results in the experimental section).

The lignin modified phenol-formaldehyde resins obtained in this manner show a similar adhesive performance as a reference resins (as illustrated in the figures). Resins were compared against LPF resins prepared by the conventional way simply by mixing lignin, phenol and formaldehyde, wherein the molar ratio (Phenol: Lignin: Formaldehyde) of the reference resins is equal to the present resins. In addition, the present resins are also compared against standard phenol resins (with no lignin content).

### Wood composite board:

As mentioned the lignin modified phenol formaldehyde resin can be used as adhesive in a wood composite board. These wood composite boards are characterized by an average tensile shear strengths (N/mm²) between 2.0 and 4.0, in particular between 2.5 and 3.5 for a blend with a lignin content of 50 wt%. These numbers are mostly equivalent to the ones of wood composites prepared with an adhesive containing lignin, phenol and formaldehyde but without using a lignin-phenol blend as an intermediate. It is thought that the stable lignin-phenol-blend according to the invention provides a sufficient homogenization of the lignin within the resin mixture and allows thus a sufficient reaction, while this is not the case in the comparative examples.

To summarize, the present method allows to achieve high lignin loadings % without storage stability issues of the lignin-phenol blend. Furthermore, the low water content of the lignin-phenol blend allows for an adjustment of lignin concentration and viscosity depending on the specific needs for the final resin production. For example, the adjustable water content will affect the kinetics of condensation reaction with formalin/formaldehyde (affecting i.e. polymerization time requirement and polymerization degree) and viscosity, giving the resin manufacturers more choices.

Thus, the advantages of the present method and the lignin-phenol blend obtained by this method are: process much cheaper, no drying step in between, better homogeneity, easy adjustable viscosity profile of the lignin-phenol-blend, easy miscibility resin mixture of phenol, caustic and formaldehyde. Furthermore, the blend can also be used in resin manufacturing facilities adapting current phenol processing equipment without major investment.

The present invention is explained in more detail by means of the following examples with reference to the Figures. It shows:
- Figure 1: a scheme illustrating the process according to an embodiment of the invention;
- Figure 2: a diagram illustrating the viscosity profile of the lignin-phenol blend obtained by the method according to the invention;
- Figure 3: a diagram illustrating the condensation time and viscosity of lignin modified phenol-formaldehyde resin according to the invention; and
- Figure 4: a diagram illustrating the tensile strength development according to ASTM D7998 - 15 measured on beech veneers obtained with the lignin modified phenol-formaldehyde resin according to the invention;

### Lignin raw materials

Softwood Kraft Lignin from different supplier is used as starting material. The molecular mass of soluble lignin is determined by Size Exclusion Chromatography equipped with an ultraviolet detector using 0.1 M sodium hydroxide solution as solvent. Concerning the quantification, polystyrene standards are used for the calibration. The reactivity of lignin for blend and adhesive preparation depends on the concentration of hydroxyl groups and methoxyl groups in the polymer backbone. In laboratory, hydroxyl and methoxyl groups are determined as sum parameters. The ratio of the sum parameters and the molecular mass determination show a basic characterization of the reactivity of the lignin. Analytical results of used lignins are shown in table 1.

**Table 1: Data sheet of used soluble lignin**

| | Lignin 1 | Lignin 2 | Lignin 3 |
|---|---|---|---|
| Dry matter / % | 97.0 | 68.0 | 67.3 |
| Ash / % | 2.7 | 0.6 | 0.8 |
| Acid Soluble Lignin / % | 0.5 | 0.3 | 2.1 |
| Acid Insoluble Lignin / % | 92.0 | 93.0 | 96 |
| Total carbohydrates /% | 2.2 | 5.8 | 2.4 |
| Phenolic OH / mmol/g | 3.5 | 4.0 | 3.0 |
| Methoxy Group / mmol /g | 5.7 | 5.3 | 5.3 |
| Mₙ | 1196 | 1095 | 1105 |
| M_{W} | 5534 | 4695 | 4755 |
| Polydispersity (DP) | 4.6 | 4.3 | 4.3 |

### Lignin-phenol blend

### Example 1:

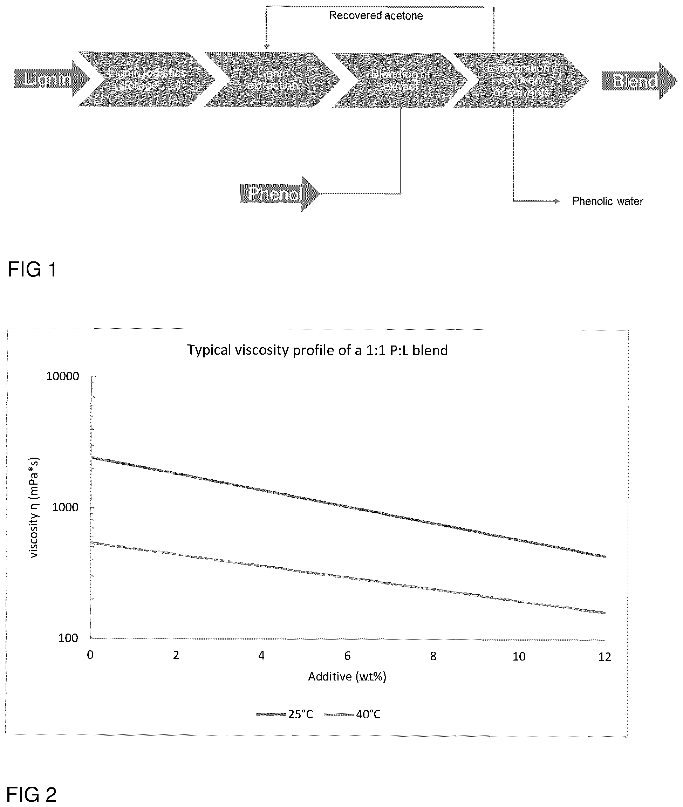

Figure 1 shows simplified process scheme of an embodiment of the present method (wet blending).

Softwood Kraft Lignin from a supplier was used as starting material. In the next step of lignin extraction, the supplied lignin was dissolved in acetone or acetone/water mixture with intensive stirrer configuration, and the undissolved lignin part (< 5%) is separated via filtration, centrifugation, decantation etc. Subsequently, the acetone/(water)-lignin mixture was blended with phenol (blending of extracts). In the following step, the solvent (acetone/water) was removed until a mixture of phenol/lignin/water/acetone starting from 50/50/0/0 to 44/44/6/6 and variants thereof was obtained. The recovered acetone may have been recycled to the lignin extraction step. Phenolic water underwent a work up. It would have also been possible to add caustic soda or other base during the blending and/or extraction step or for the purpose of removing deposits during operational periods of cleaning and regeneration of the equipment.

The steps of lignin extraction and blending the extract with phenol could have also be applied in a reverse order.

The viscosity of the lignin-phenol blend may have been adjusted by the acetone content of the blend.

Figure 2 shows a typical viscosity profile of a 1 : 1 phenol-lignin blend. The viscosity of the blend decreases with the addition of a suitable viscosity adjusting additive, such as acetone.

### Viscosity measurement

The dynamic viscosity was determined by the Stabinger viscosimeter SVM 3000 (Anton Paar, Austria) at 25 °C following the ASTM D7042 standard test method. Ambient conditions were ~21 °C and 50-60 % r.h.

Principle of the measurement was as follows: a rotating magnet produced an eddy current field with an exact speed-dependent brake torque. The torque resolution was an unmatched 50 pNm. A measuring cell containing a tube filled with ∼2.5 ml of the sample was rotating at a constant speed, which was determined by the equilibrium between the effect of the eddy current brake and the shear forces at work in the sample. The dynamic viscosity was calculated from the rotor speed.

### Example 2:

In another embodiment, the PLB is synthesized in the following three steps:
1. Lignin extraction in acetone
2. Extract centrifugation
3. Solvent (i.e., acetone + water) distillation

In the first step, wet (containing 35 wt% of water) or dry (with no water) lignin was extracted in acetone. In particular, 1200 ml of acetone was added into 2 L RC1 reactor (Mettler Toledo) equipped with anchor stirrer. Afterwards, either 600 g of wet lignin or ca. 400 g of dry lignin was added slowly (-300 g of wet lignin/min) into the acetone stirred at 300 rpm. For the dry lignin, acetone containing 12 wt% of water was used. For the wet lignin, no additional water was added into the mixture. Next, the mixture was heated up to 30 °C and stirred at 600 rpm for 10 min to allow full homogenization.

In the second step, homogenized lignin-acetone-water (LAW) extract was centrifuged for 10 min at relative centrifugal force (RCF) of 3200. For the centrifugation, centrifuge Rotanta 460R (Hettich) was used.

Subsequently, the lignin content in the centrifuged lignin-acetone-water (LAW) extract was measured after drying the LAW at 105 °C. In particular, 2 g of LAW was added onto a Petri dish, the exact weight was noted and the dried LAW was weighted afterwards to calculate the lignin solid content in wt%. Based on this value, phenol amount in g was calculated and added into the centrifuged LAW (lignin:phenol mass ratio is of 1:1). As the result, phenol-lignin-acetone-water (PLAW) solution was ready for solvent (i.e., acetone+water) distillation in the third step.

In the third step, solvent distillation was performed either in the rotavapor (Büchi) at 120 °C under atmospheric pressure or at 35 °C under vacuum. The target residual solvent content was approx. 12%, therefore the final condensate weight was calculated upfront and serves, together with the vapour temperature, as the stop criterium for the distillation (once reached, the distillation was stopped).

In the following
Table the preparation of further PL-blends according to the invention are shown.

**Table 2**

| PL# | Supplier | | Phenol (%) | Water (%) | Acetone (%) | Lignin (%) |
|---|---|---|---|---|---|---|
| 1 | Lignin 1 | centrifuged | 41.00 | 13.53 | 0.64 | 44.83 |
| 2 | Lignin 1 | centrifuged | 38.33 | 12.65 | 7.14 | 41.88 |
| 3 | Lignin 1 | not centrifuged | 41.14 | 14.81 | 7.36 | 36.69 |
| 4 | Lignin 1 | centrifuged | 43.30 | 3.10 | 3.10 | 50.50 |
| 5 | Lignin 2 | centrifuged | 43.30 | 3.20 | 3.20 | 50.30 |

### Lignin modified phenol-formaldehyde resin (LPF)

The PL-blends were used for the preparation of lignin-phenol-formaldehyde (LPF) resins.

### Example 3: First lignin modified phenol formaldehyde (LPF) resin according to the invention (LPF resin A2)

152.83 g of PL blend 1 was added in a round flask equipped with a magnetic stirrer and heated up to 65°C. Water (11.04 g) was added followed by 19.77 g of 50 % aqueous NaOH-solution, which was constantly added over 20 minutes. The mixture was further stirred at 65°C for 15 minutes. A 126.83 g of a laboratory formaldehyde solution (concentration of 37 %) was then added over 30 minutes followed by another 20 minutes of stirring at 65°C. The second part of the 50 % NaOH solution (39.54) was then constantly added over 20 minutes, while temperature could increase due to the exothermal reaction up to 85°C. The LPF resin was further condensed at this elevated temperature until the viscosity increased to 500 mPa*s (measured at 25°C) and then cooled down to room temperature in a cold water bath.

### Example 4: Second lignin modified phenol formaldehyde (LPF) resin according to the invention (LPF resin B2)

In total 47.24 g of PL blend 2 was added in a round flask, stirred with a magnetic stirrer and heated up to 45°C. The first part of a 50 % aqueous NaOH solution (4.62 g) was then added slowly to the blend over 20 minutes, while temperature could increase to 65°C followed by 35.42 g of a laboratory formaldehyde solution (concentration of 37 %), which was constantly added over 30 minutes to the mixture. The resin was then condensed at 85°C until viscosity reached 400 mPa*s (measured at 25°C) and cooled down to 70°C by adding the recalculated amount of water (5.73 g). The second part of the NaOH solution (5.98 g) was then added continuously over 20 minutes. A second condensation step was then performed, where the LPF resin was condensed at 85°C until viscosity reached 500 mPa*s (measured at 25°C) followed by cooling down to room temperature.

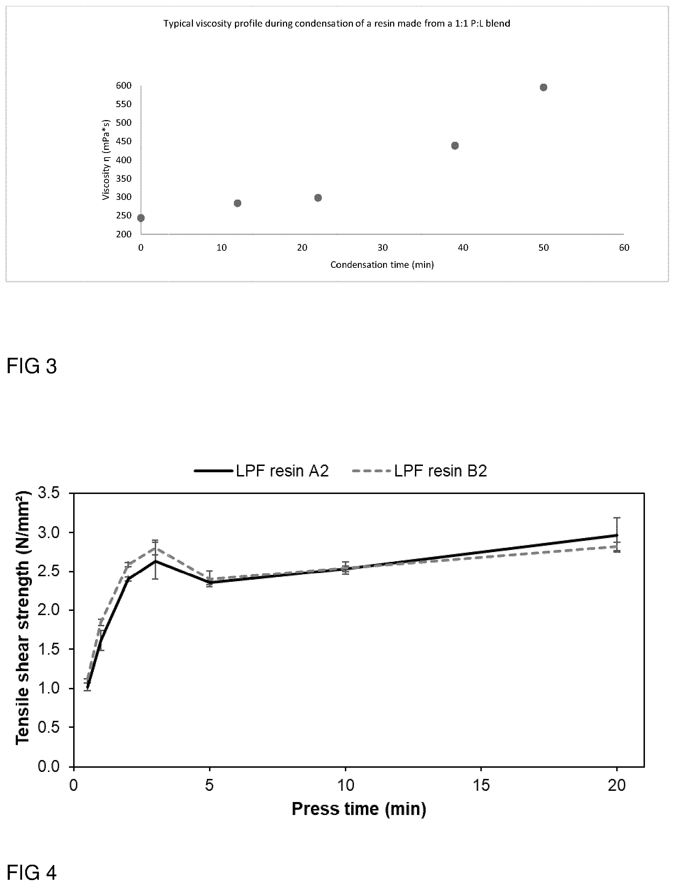

Table provides the main resin properties of the LPF resins A2 and B2, while Fig. 4 shows the bonding strength development of the two resins measured with ABES (Automated Bonding Evaluation System). For the measurements two beech veneers with an overlapping area of 5 mm by 20 mm were bonded together using a LPF resin application amount of 200 g/m² and a press temperature of 120°C at varying press times. Both examples of LPF resins performed similarly in their bonding properties.

**Table 3**

| | LPF resin A2 | LPF resin B2 |
|---|---|---|
| Lignin:Phenol | 52.2:47.8 | 52.2:47.8 |
| Solid content (%) | 54.1 | 53.6 |
| Viscosity (mPa*s) at 25°C | 616 | 567 |
| pH (50% in water) (-) | 10.8 | 9.7 |
| Free formaldehyde (%) | 0.16 | 1.07 |

In
Table 4 the preparation of further LPF resins are provided.

**Table 4**

| LPF# | Lignin supplier | LPF recipe | Formaldehyde solution (%) | Phenol substitution (%) | F/P (mol/mol) | NaOH/P (mol/mol) | PL# from Table |
|---|---|---|---|---|---|---|---|
| 1 | Lignin 1 | Recipe 1 | 37 | 52.2 | 2.35 | 1.1 | 1 |
| 2 | Lignin 1 | Recipe 1 | 54 | 52.2 | 2.35 | 1.1 | 1 |
| 3 | Lignin 1 | Recipe 1 | 37 | 52.2 | 2.35 | 1.1 | 2 |
| 4 | Lignin 1 | Recipe 1 | 54 | 52.2 | 2.35 | 1.1 | 2 |
| 5 | Lignin 1 | Recipe 2 | 37 | 52.2 | 2.30 | 0.722 | 1 |
| 6 | Lignin 1 | Recipe 2 | 37 | 52.2 | 2.30 | 0.722 | 2 |
| 7 | Lignin 1 | Recipe 1 | 37 | 47.1 | 2.35 | 1.1 | 3 |
| 8 | Lignin 1 | Recipe 1 | 37 | 53.8 | 2.35 | 1.1 | 4 |
| 9 | Lignin 2 | Recipe 1 | 37 | 53.7 | 2.35 | 1.1 | 5 |
| 10 | Lignin 1 | Recipe 1 | 37 | 51.9 | 2.35 | 1.1 | 6 |

### Wood composite board comprising Lignin modified phenol formaldehyde resin (LPF)

The following method was used to test the adhesive strength of plywood boards. The LPF resin synthesised according to example A2 was tested according to the plywood standard EN 314-1 and evaluated according to EN 314-2. Plywood was prepared using 9 layers of birch veneers. Before resin application, 35 g of water and 35 g of dry wheat flour (10 % calculated on wet LPF resin) were added to the LPF resin (350 g) in order to increase the viscosity of the adhesive mixture.

On each veneer 155 g/m² of resin was applied before the plywood board was cold pressed for 10 minutes in a hydraulic press at a specific pressure of 1 MPa. After a lay-up time of 1 hour, the plywood board was hot pressed at 135°C for 11 minutes using a specific pressure of 1.6 MPa. Lap-joint specimens were cut out of the plywood board after 7 days of storage in standard climate (20°C/65 % r.h.). The specimens were further stored before being tested. Half of the specimens were immersed in 20°C warm water for 24 hours, while the second half was immersed in boiling water for 6 hours followed by cooling down in water at 20°C for 1 hour. The tensile shear strength was measured in wet conditions and the determined arithmetic mean values are summarized in Table 5.

**Table 5**

| | LPF resin A2 |
|---|---|
| immersion for 24 hours in water (20°C) | 1.07 N/mm² |
| immersion for 6 hours in boiling water followed by 1 hour of cooling in water at 20 °C | 0.92 N/mm² |

## Claims

1. Method for preparing a stable lignin-phenol blend comprising the steps of:
a) mixing a lignin source with a dispersion system comprising a solvent, preferably an organic solvent, more preferably comprising water and an organic solvent, to at least partially disperse the lignin and to obtain a first mixture comprising a dispersed lignin fraction, a precipitated lignin fraction and the dispersion system,
b) separating the precipitated lignin fraction from the dispersed lignin fraction to provide a second mixture comprising dispersed lignin and the dispersion system,
c) mixing phenol, in particular liquefied phenol, with the second mixture comprising dispersed lignin and dispersion system to provide a third mixture comprising dispersed lignin, phenol and the dispersion system;
d) optionally removing at least part of the dispersion system from said third mixture comprising dispersed lignin, phenol and dispersion system,
e) obtaining a stable lignin- phenol blend with content of solvent, preferably water, more preferably water and organic solvent, of lower than 20 wt%, preferably lower than 12 wt%, more preferably lower than 8 wt% such as lower than 6 wt%.

2. Method according to claim 1, **characterized in that** steps b) and c) are applied in reverse order.

3. Method according to claim 1 or 2, **characterized in that** the dispersion system comprises water, low molecular alcohols, in particular, ethanol, methanol, iso-propanol, low molecular ketones, in particular acetone, glycols, phenol or mixtures thereof with water.

4. Method according to one of the preceding claims, **characterized in that** the dispersion system comprises a) acetone, ethanol, methanol, iso-propanol, or b) an acetone/ water, ethanol/ water, phenol/ water, phenol/ acetone/ water or phenol/ acetone mixture, preferably c) acetone, ethanol, or d) acetone/ water or ethanol /water, more preferably e) acetone or f) acetone/ water.

5. Method according to one of the preceding claims, **characterized in that** between 100-800 g lignin source / L solvent, preferably between 300-600 g lignin source / L solvent, more preferably 400-500 g lignin source / L solvent are mixed with the dispersion system in step a).

6. Method according to one of the preceding claims, **characterized in that** the dispersed lignin fraction is separated from the precipitated fraction in step b) by centrifugation, decantation, siphoning, sedimentation, or filtration.

7. Method according to one of the preceding claims, **characterized in that** the amount of phenol added to the mixture of dispersed lignin and dispersion system in step c) is between 20 wt% and 80 wt%, preferably between 25 wt% and 70 wt%, more preferably between 30 and 60 wt%, and most preferably between 33-50 wt% in respect to the combined sum of lignin and phenol.

8. Method according to one of the preceding claims, **characterized in that** the dispersion system is removed from said (third) mixture comprising dispersed lignin, phenol and the dispersion system in step d) until the mixture has a phenol / lignin / organic solvent composition of 50 / 50 / 0 to 40 / 40 / 20, preferably 50 / 50 / 0 to 44 / 44 / 12 or variations thereof.

9. Method according to one of the preceding claims, **characterized in that** the dispersion system is removed from said (third) mixture comprising dispersed lignin, phenol and the dispersion system in step d) until the mixture has a phenol / lignin / water / organic solvent composition of 50 / 50 / 0 / 0 to 40 / 40 / 10 / 10, preferably 50 / 50 / 0 / 0 to 40 / 40 / 6 / 6 or variations thereof.

10. Method according to one of the preceding claims, **characterized in that** in a further step at least one stabilizer is added to the lignin phenol blend obtained.

11. Stable lignin-phenol blend, in particular stable colloidal lignin phenol blend, for use in lignin modified phenol-formaldehyde resins obtained in a method according to one of the preceding claims comprising
- lignin in an amount between 10-90 wt%, preferably between 30-90 wt%, more preferably between 50 - 90 wt%, even more preferably between 60-90wt%;
- phenol in an amount between 15-90 wt%, preferably between 15-70 wt%, more preferably between 15 and 50 wt%, even more preferably between 15% and 35wt%; and
- optionally a stabilizer in an amount between 0-25 wt%, preferably between 1-15wt%, more preferably 4-10 wt%
**characterized by**
a residual solvent content, in particular organic solvent, more in particular aqueous organic solvent content, of less than 20 wt%, preferably less than 12 wt%, more preferably less than 8 wt%.

12. Lignin phenol blend according to claim 11, **characterized by** a residual content of organic solvent lower than 15 wt%, preferably lower than 10 wt%, more preferably lower than 8 wt% and/or a residual content of water lower than 8 wt%, preferably lower than 5 wt%, more preferably lower than 3 wt%, even more preferably water free.

13. Lignin phenol blend according to one of the claims 11 or 12, **characterized by** a viscosity of at most 25 000 mPa*s, preferably at most 15000 mPa*s, more preferably at most 10000 mPa*s (measured at 25°C according to ASTM D7042-04).

14. Lignin modified phenol-formaldehyde resins obtainable by reacting a stable lignin-phenol blend according to one of the claims 11-13 and an aldehyde, in particular formaldehyde.

15. Wood composite board comprising at least one Lignin modified phenol-formaldehyde resin according to claim 14.
